(19) Europäisches Patentamt
European Patent Office
Office européen des brevets

(11) **EP 2 449 642 B1**

(12) **EUROPÄISCHE PATENTSCHRIFT**

(45) Veröffentlichungstag und Bekanntmachung des Hinweises auf die Patenterteilung:
**16.12.2015 Patentblatt 2015/51**

(21) Anmeldenummer: **10726459.0**

(22) Anmeldetag: **08.06.2010**

(51) Int Cl.:
*H02H 3/093* *(2006.01)*    *H02H 7/22* *(2006.01)*
*H02H 3/087* *(2006.01)*

(86) Internationale Anmeldenummer:
**PCT/EP2010/057987**

(87) Internationale Veröffentlichungsnummer:
**WO 2011/000670 (06.01.2011 Gazette 2011/01)**

(54) **VORRICHTUNG UND VERFAHREN ZUM ABSICHERN EINER ELEKTRISCHEN LEITUNG MIT EINEM STEUERBAREN SCHALTELEMENT**

DEVICE AND METHOD FOR PROTECTING AN ELECTRIC WIRE WITH A CONTROLLABLE SWITCH

DISPOSITIF ET PROCÉDÉ DE PROTECTION D'UN CONDUCTEUR ÉLÉCTRIQUE AVEC UN INTERRUPTEUR STATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **01.07.2009 DE 102009027387**

(43) Veröffentlichungstag der Anmeldung:
**09.05.2012 Patentblatt 2012/19**

(73) Patentinhaber: **Lisa Dräxlmaier GmbH**
**84137 Vilsbiburg (DE)**

(72) Erfinder: **WORTBERG, Michael**
**84405 Dorfen (DE)**

(56) Entgegenhaltungen:
**EP-A1- 0 465 384      EP-A1- 0 713 279**
**EP-A2- 0 860 946      WO-A1-2009/056903**
**WO-A1-2010/145757      WO-A2-2005/015704**
**US-A- 5 994 790**

**Beschreibung**

Gebiet der Erfindung

Die vorliegende Erfindung betrifft eine Vorrichtung und ein Verfahren zum Absichern einer elektrischen Leitung mit einem steuerbaren Schaltelement, und insbesondere eine Vorrichtung und ein Verfahren, die derart ausgebildet sind, dass eine intelligente Steuerung des Schaltelements die Leitung absichert.

Stand der Technik

Herkömmlich werden elektrische Leitungen, z. B. in einem Fahrzeug, durch Sicherungen abgesichert, die typischerweise für eine Gleichlast der Leitung ausgelegt sind. Bisher werden Leitungen in einem Fahrzeug vor allem durch Schmelzsicherungen abgesichert. Kurzzeitige Impulslasten, die durch große Stromspitzen gekennzeichnet sind, können jedoch die Lebensdauer einer Sicherung verkürzen, da sie zwar unter Umständen keine Probleme für die elektrische Leitung darstellen, jedoch die Sicherung derart beanspruchen können, da die Impulslasten den eigentlichen Auslösebedingungen nahekommen, so dass öfter wiederkehrende Impulslasten die Lebensdauer der Sicherung verringern. Wenn beispielsweise Sicherungen in einem Bereich von 40 bis 50A aufschmelzen, führen wiederholte Stromspitzen in dem Bereich über 30 A zu einem Verschleiß und einer Alterung der Sicherung. Demzufolge werden elektrische Sicherungen typischerweise über größere Ströme ausgelegt, wodurch auch eine Dimensionierung der elektrischen Leitung daran angepasst werden muss, was zu einem größeren Material- und Ressourcenverbrauch führt.

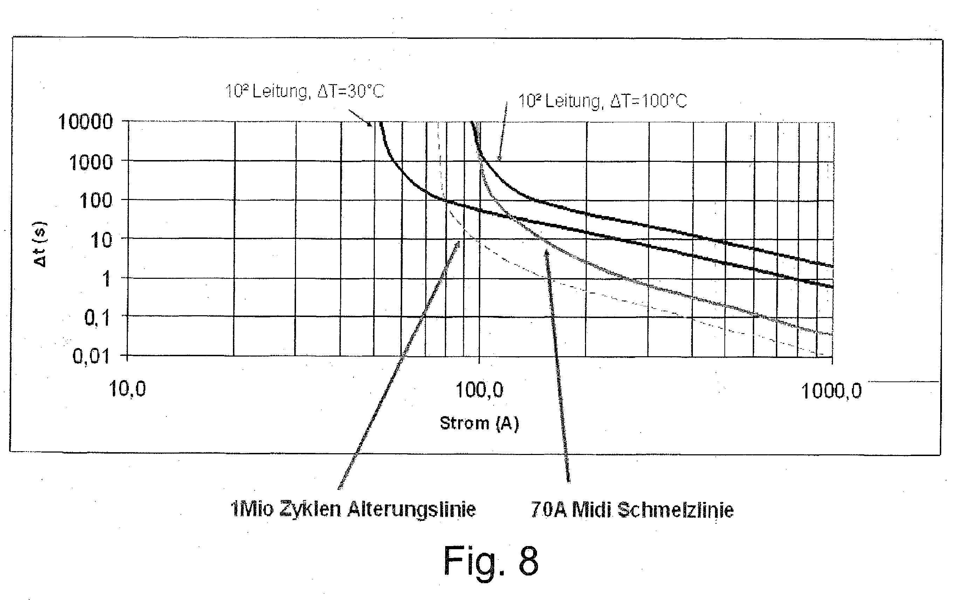

Figur 8 zeigt die Stromtragfähigkeit einer Leitung und einer Schmelzsicherung über die Impulslänge $\Delta t$. In Figur 8 sind mehrere Kennlinien einer Strom-Zeit-Charakteristik für Schmelzsicherungen und Leitungen aufgetragen. Insbesondere stellt Figur 8 ein Beispiel einer elektrischen Leitung mit einem Durchmesser von 10 mm$^2$ bei einer Temperaturerhöhung um 30°C und einer Temperaturerhöhung um 100°C dar, sowie eine Schmelzlinie einer elektrischen Sicherung von 70A und eine Schmelzlinie der gleichen Schmelzsicherung nach einer Million Verwendungszyklen. Aus dem Diagramm ist ersichtlich, dass die Leitung eine hohe thermische Trägheit besitzt, was bei einer Schmelzsicherung jedoch nicht vorliegt (siehe hohe Ströme auf x-Achse und kurze Impulslänge auf y-Achse). Beispielsweise kann ein Stromimpuls von 1000s Länge (annähernd Gleichstrom) von der Leitung mit einer Stromstärke von 55A getragen werden, von der Sicherung jedoch mit einer Stromstärke von 100A, wobei zum Schutz der Leitung eine Erwärmung durch eine Temperaturerhöhung um mehr als 30°C vermieden werden soll.

Da die Kennlinien für eine Sicherung und Leitung nicht zum Überlappen gebracht werden können, kann eine Schmelzsicherung eine Leitung nicht optimal schützen. Im in Figur 8 gezeigten Beispiel ist die Leitung zwar im Bereich t < 10s abgesichert, jedoch im Bereich t > 50s (Gleichlast) können Überlastströme (kriechender Kurzschluss, Überlast) zur Zerstörung der elektrischen Leitung führen. Da die Charakteristiken von Schmelzsicherung und Leitung nicht angepasst sind, kommt es bei der Auslegung von Leitungssätzen inhärent zu einer Überdimensionierung der Querschnitte der elektrischen Leitungen und damit zu einer nicht-effizienten Ausnutzung der Ressourcen, z.B. Kupferverbrauch.

Ob einer Paarung aus Leitung und Sicherung eine Last tragen kann, hängt vom Lastprofil der Last ab. Im dargestellten Beispiel würde bei einem über die Leitung gehenden Stromimpuls der Länge 1s mit 300A im Laststrom die Sicherung auslösen, obwohl die Leitung diesen Stromimpuls tragen könnte. Es ist also schwer, wenn nicht unmöglich, eine passende Schmelzsicherung für eine Leitung zu finden. Herkömmlich sind thermische Modelle bekannt, die zum Überwachen der Temperatur in einer Leitung verwendet werden können, wobei eine Leitung getrennt werden kann, wenn die Temperatur einen maximalen Temperaturwert übersteigt. Solch ein thermisches Modell verwendet beispielsweise den gemessenen Strom, der durch die Leitung fließt.

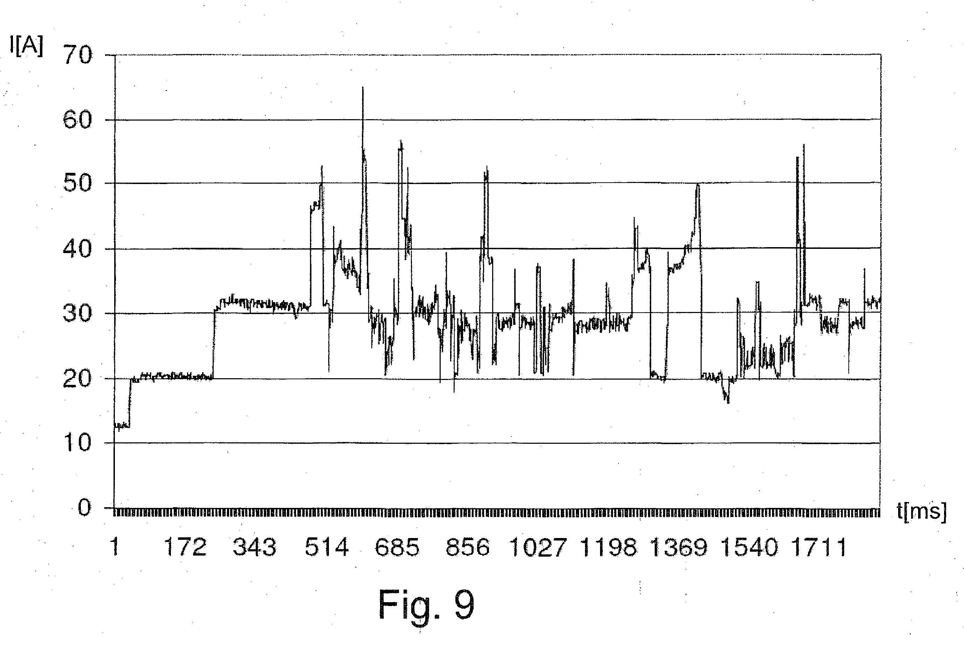

Figur 9 zeigt ein gemessenes Lastprofil einer Leitung in einem Fahrzeug. Aufgrund der starken Schwankungen der Stromstärke wird deutlich, dass ein thermisches Modell, das einen bestimmten Stromwert im Zeitbereich zur Berechnung einer Temperatur misst, nur ausreichende Genauigkeit bietet, wenn das Lastprofil im Wesentlichen konstant ist, da eine Temperaturerhöhung in der Leitung nicht nur von einem Stromwert abhängt, sondern vor allem, wie lange der Stromwert vorliegt.

Jedoch variiert, wie in Figur 9 gezeigt, die Stromstärke in modernen Bordnetzen sehr stark, da insbesondere bei Kraftfahrzeugen eine große Anzahl von völlig unterschiedlichen Verbrauchern (Lasten) am Bordnetz angeschlossen ist.

WO 2010/145757 A1 ist eine nachveröffentlichte Patentanmeldung mit dem Titel "Steuerverfahren zur Auslösung eines elektronischen Schutzschalters". Hier soll mit einfachen Mitteln, insbesondere geringem Speicherplatzbedarf und Rechenleistung ein Steuerverfahren zur Auslösung eines Schutzschalters ermöglicht werden. Abtastwerte eines Stromsignals werden fortlaufend erfasst und ein erster Summenwert wird gebildet. In einer weiteren Prüfstufe wird über eine vorgegebene Anzahl von ersten Summenwerten ein zweiter Summenwert gebildet. Die Summenwerte werden mit einem Auslösekriterium verglichen, und eine Auslöseelektronik steuert einen Elektromagneten an, um unterschiedliche Schaltzustände anzunehmen.

EP 0 713 279 A1 beschreibt eine Vorrichtung, die einen Schutz und ein Messverfahren in einem elektrischen Wechselstromsystem bereitstellt, das eine Multifunktionsabtasttechnik verwendet. Um eine sinusförmige Wellenform eines Wechselstroms zu erlangen, werden mehrere Abtastwerte pro Zyklus genommen. Einzelne Messwerte werden quadriert und aufsummiert. Falls ein Schwellenwert überschritten wird, wird eine "Trip"-Routine aufgerufen. Unterschiedliche separierbare Kontakte können von dem "Trip"-Mechanismus (Auslösemechanismus) angesprochen werden.

WO 2009/056903A1 beschreibt eine Überstromschutzschaltung mit einem Stromeingang und einem Stromausgang sowie einem Schalter und einem Sensor zum Überwachen eines Laststroms. Der Laststrom kann beispielsweise verglichen werden mit verschiedenen Schwellenwerten und die Schaltung kann in einem Fahrzeug verwendet werden.

Zusammenfassung der Erfindung

Der Erfindung liegt die Aufgabe zugrunde, eine zuverlässige Vorrichtung und Verfahren zum Absichern einer elektrischen Leitung bereitzustellen, die einfach auf die Eigenschaften einer elektrischen Leitung abgestimmt werden können.

Diese Aufgabe wird durch eine Vorrichtung zum Absichern einer elektrischen Leitung mit den Merkmalen des Anspruchs 1, durch ein Bordnetz zur Stromversorgung eines Fahrzeugs mit den Merkmalen des Patentanspruchs 13 sowie durch ein Verfahren zum Absichern einer elektrischen Leitung mit den Merkmalen des Patentanspruchs 14 gelöst. Vorteilhafte Ausführungsformen sind in den Unteransprüchen beschrieben.

Gemäß einer Ausführungsform umfasst die Vorrichtung zum Absichern einer elektrischen Leitung ein steuerbares Schaltelement, das ausgebildet ist mindestens zwei Zustände anzunehmen, nämlich einen ersten Zustand mit einem ersten Widerstand und einen zweiten Zustand mit einem zweiten Widerstand niedriger als der erste Widerstand. Ferner umfasst die Vorrichtung eine Strommesseinrichtung zum Messen eines Stroms über die Leitung, eine Mittelungseinrichtung zum Bestimmen auf Grundlage des gemessenen Stroms eines ersten Stromimpulses, gemittelt über eine erste Zeitlänge und eines zweiten Stromimpulses, gemittelt über eine zweite Zeitlänge länger als die erste Zeitlänge, und eine Steuerung zum Steuern des Schaltelements, so dass das Schaltelement in den ersten Zustand schaltet, wenn der erste oder der zweite gemittelte Stromimpuls einen ersten bzw. zweiten Schwellenwert einer Auslösekennlinie überschreitet.

Durch Verwendung von mindestens zwei Schwellenwerten, kann die Vorrichtung an die charakteristische Kennlinie der elektrischen Leitung angepasst werden. Insbesondere kann durch Mitteln von Stromimpulsen über verschieden lange Zeitlängen nicht nur ein harter Kurzschluss erfasst werden, sondern auch ein kriechender Kurzschluss. Somit stellt die Vorrichtung eine intelligente Sicherung dar, die ein Lastspektrum messen kann und gemittelte Stromimpulse mit Werten einer Auslösekennlinie, die annähernd mit den thermodynamischen Eigenschaften der Leitung übereinstimmt, vergleicht.

Gemäß einer vorteilhaften Ausführungsform ist die Mittelungseinrichtung ausgebildet das quadratische Mittel mehrerer einzelner Stromimpulse in der ersten Zeitlänge zu erhalten als ersten Stromimpuls, und/oder ausgebildet das quadratische Mittel mehrerer einzelner Stromimpulse in der zweiten Zeitlänge zu erhalten als zweiten Stromimpuls. Durch eine quadratische Mittelung über Impulslänge, kann somit eine Anzahl von mehreren einzelnen Stromimpulsen einer bestimmten Länge ersetzt werden durch einen gemittelten Stromimpuls. Eine solche quadratische Mittelung stellt eine energetisch äquivalente Mittelung dar, d.h. das thermische Äquivalent zu den einzelnen Stromimpulsen. Somit kann das Temperaturverhalten der Leitung indirekt verlässlich über den Strom gemessen werden.

Gemäß einer vorteilhaften Ausführungsform umfasst die Vorrichtung einen Speicher zum Speichern des ersten und zweiten Schwellenwerts der Auslösekennlinie, die darstellt bei welchen Stromimpulsen das Schaltelement zu schalten ist. Somit kann die Vorrichtung einfach an Kennlinien anderer Leitungen angepasst werden, indem für verschiedene Leitungen verschiedene Schwellenwerte gespeichert werden können.

Gemäß einer anderen Ausführungsform ist der Speicher ausgebildet mindestens vier Schwellenwerte der Auslösekennlinie für vier verschiedene Stromimpulslängendekaden zu speichern. Somit kann ein großer Bereich von Impulslängen abgedeckt werden, so dass Überlasten verlässlich für verschiedene Arten von Kurzschlüssen, harte und kriechende Kurzschlüsse, erfasst werden können. Bevorzugt erstrecken sich die vier Stromimpulslängendekaden über eine Zeitlänge von 0s bis 0,01s; 0,1s; 10s bzw. 100s.

Gemäß einer weiteren vorteilhaften Ausführungsform ist das steuerbare Schaltelement in Reihe verbindbar mit der elektrischen Leitung. Somit kann die elektrische Leitung ohne Verwendung einer Sicherung nur durch das steuerbare Schaltelement abgesichert werden.

Gemäß einer weiteren vorteilhaften Ausführungsform umfasst die Vorrichtung ferner eine elektrische Sicherung zum Absichern der elektrischen Leitung. Insbesondere sind die elektrische Sicherung und das steuerbare Schaltelement als Parallelschaltung ausgebildet, die in Reihe mit der elektrischen Leitung verbindbar ist. Somit kann das Schaltelement Teile der Impulslast übernehmen und die elektrische Sicherung entlasten, wodurch von der Leitung akzeptierbare Impulslasten bei der Vorrichtung auftreten können, ohne die Sicherung auszulösen.

Gemäß einer weiteren, vorteilhaften Ausführungsform ist die elektrische Sicherung in einem ersten Zweig der Parallelschaltung angeordnet, der einen dritten Widerstand aufweist und das steuerbare Schaltelement in einem zweiten Zweig der Parallelschaltung angeordnet, wobei der erste Widerstand höher als der dritte Widerstand ist und der zweite Widerstand niedriger als der dritte Widerstand ist, und das Schaltelement ausgebildet ist bei einer Impulslastbedingung in den zweiten Zustand zu schalten. Somit können von der Leitung akzeptierbare Impulslasten bei der Vorrichtung auftreten ohne die Sicherung auszulösen.

Gemäß einer weiteren vorteilhaften Ausführungsform stellt die Impulslastbedingungen eine Überschreitung eines Impulslast-Schwellenwerts des durch die Parallelschaltung fließenden gemittelten Stromimpulses dar. Somit kann das Schaltelement abhängig von einem bestimmten Impulslast-Schwellenwert gesteuert werden, um die Sicherung zu schützen, solange die Leitung noch zum Tragen des Stromimpulses ausgelegt ist.

Gemäß einer weiteren vorteilhaften Ausführungsform ist das steuerbare Schaltelement ausgebildet bei einer Überlastbedingung von dem zweiten Zustand in den ersten Zustand zu schalten. Somit kann auch, z.B. bei Überschreitung einer bestimmten Stromstärke für eine bestimmte Zeit, die von der Leitung nicht getragen werden kann, diese Überlastbedingung die elektrische Sicherung zum Auslösen bringen.

Gemäß einer weiteren vorteilhaften Ausführungsform schaltet das steuerbare Schaltelement von dem zweiten Zustand in den ersten Zustand, wenn ein zweiter Impulslast-Schwellenwert des durch die Parallelschaltung fließenden und dann gemittelten Stromimpulses unterschritten wird. Somit kann die Vorrichtung in einen Normalzustand zurückkehren, indem der Strom größtenteils oder vollständig von der Sicherung getragen wird bzw. über die Sicherung fließt.

Gemäß einer weiteren vorteilhaften Ausführungsform ist die Strommesseinrichtung mit dem Schaltelement und/oder der elektrischen Sicherung in Reihe geschaltet, zum Messen der Stromimpulse. Somit kann ein Lastprofil des über die Leitung fließenden Stroms und der entsprechenden Stromimpulse verlässlich erhalten werden.

Gemäß einer anderen Ausführungsform umfasst ein Bordnetz zur Stromversorgung eines Fahrzeugs, insbesondere eines Automobils, die oben beschriebenen Vorrichtungen.

Gemäß einer anderen Ausführungsform umfasst ein Verfahren zum Absichern einer elektrischen Leitung das Messen eines Stroms über die Leitung, Bestimmen auf Grundlage des gemessenen Stroms mindestens eines ersten Stromimpulses, gemittelt über eine erste Zeitlänge und eines zweiten Stromimpulses, gemittelt über eine zweite Zeitlänge länger als die erste Zeitlänge, und Schalten eines Schaltelements von einem zweiten Zustand in einen ersten Zustand, wenn der erste oder zweite gemittelte Stromimpuls einen ersten bzw. zweiten Schwellenwert einer Auslösekennlinie überschreitet. Der erste Zustand weist einen ersten Widerstand auf und der zweite Zustand einen zweiten Widerstand, der niedriger ist als der erste Widerstand.

Somit kann eine elektrische Leitung verlässlich im Hinblick auf harte oder kriechende Kurzschlüsse abgesichert werden.

Gemäß einer vorteilhaften Ausführungsform werden die Schwellenwerte der Auslösekennlinie derart gewählt, dass sie auf einer Kennlinie der Leitung oder zwischen Werten der Kennlinie der Leitung und einer Lastspektrumskennlinie liegen, die eine zeitliche Stromverteilung bei den größten zulässigen Strömen in einem Normalbetrieb von mindestens einer Last an der Leitung darstellt. Somit kann das Verfahren auf die Kennlinie der zu verwendenden Leitung abgestimmt werden.

Weitere vorteilhafte Merkmale der Erfindung werden in der detaillierten Beschreibung der Ausführungsformen und in den Ansprüchen offenbart.

Kurze Beschreibung der Zeichnungen

Im Folgenden wird die Erfindung ausführlich anhand der beigefügten Zeichnungen beschrieben.

Figur 1 zeigt schematisch eine Vorrichtung zum Absichern einer elektrischen Leitung gemäß einer Ausführungsform.

Figur 2 zeigt ein Beispiel einer Mittelung von einzelnen Stromimpulsen in einem Zeitfenster.

Figur 3 zeigt ein Flussdiagramm, das die Schritte eines Verfahrens zum Absichern einer elektrischen Leitung gemäß einer weiteren Ausführungsform zeigt.

Figur 4 zeigt schematisch wie eine Lastspektrumskennlinie erhalten werden kann.

Figur 5 zeigt eine Lastspektrumskennlinie, eine Kennlinie der Leitung und eine Auslösekennlinie der Vorrichtung im Strom-Zeit-Diagramm.

Figur 6 zeigt schematisch eine Vorrichtung zum Absichern einer elektrischen Leitung mit einer Parallelschaltung gemäß einer Ausführungsform.

Figuren 7A und 7B erklären die Funktionen der in den Figuren 1 und 6 gezeigten Vorrichtungen.

Figur 8 zeigt die Stromtragfähigkeit einer elektrischen Leitung und einer Schmelzsicherung über die Impulslänge.

Figur 9 zeigt ein typisches gemessenes Lastprofil eines Bordnetzes.

Beschreibung der bevorzugten Ausführungsform

Bevorzugte Ausführungsformen der vorliegenden Erfindung werden nachfolgend ausführlich unter Bezugnahme auf die begleitenden Zeichnungen beschrieben. Dabei sind in den verschiedenen Zeichnungen gleiche oder entsprechende Elemente jeweils mit den gleichen oder ähnlichen Bezugszeichen bezeichnet.

Die bevorzugten Ausführungsformen der Erfindung, die im Folgenden detailliert beschrieben werden, werden ausführlich mit Bezug auf eine Vorrichtung zur Absicherung einer elektrischen Leitung in einem Fahrzeug beschrieben. Jedoch wird vermerkt, dass die folgende Beschreibung nur Beispiele enthält und nicht als die Erfindung einschränkend angesehen werden sollte.

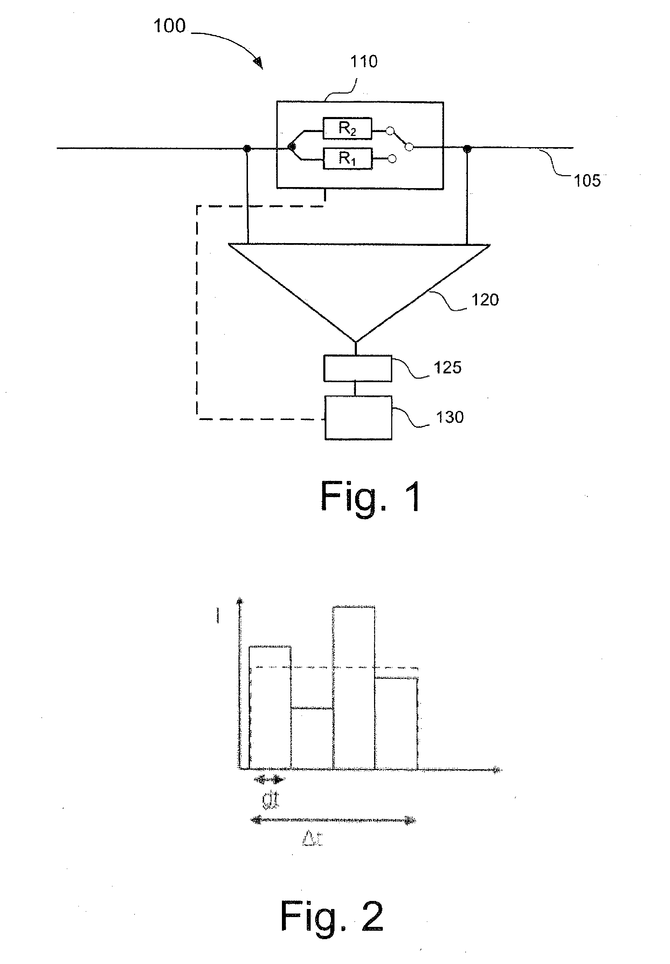

Figur 1 zeigt schematisch Elemente einer Vorrichtung zum Absichern einer elektrischen Leitung 105, wie sie beispielsweise in einem Fahrzeug verwendet werden kann. Die Vorrichtung 100 umfasst ein steuerbares Schaltelement 110, eine Strommesseinrichtung 120, eine Mittelungseinrichtung 125 und eine Steuerung 130. Die Mittelungseinrichtung 125 kann auch in der Strommesseinrichtung 120 oder der Steuerung 130 integriert sein.

Wie in Figur 1 gezeigt, ist das steuerbare Schaltelement 110 derart ausgebildet, dass es zwei Zustände annehmen kann, nämlich einen ersten Zustand mit einem ersten Widerstand $R_1$ und einen zweiten Zustand mit einem zweiten Widerstand $R_2$, der niedriger ist als der erste Widerstand.

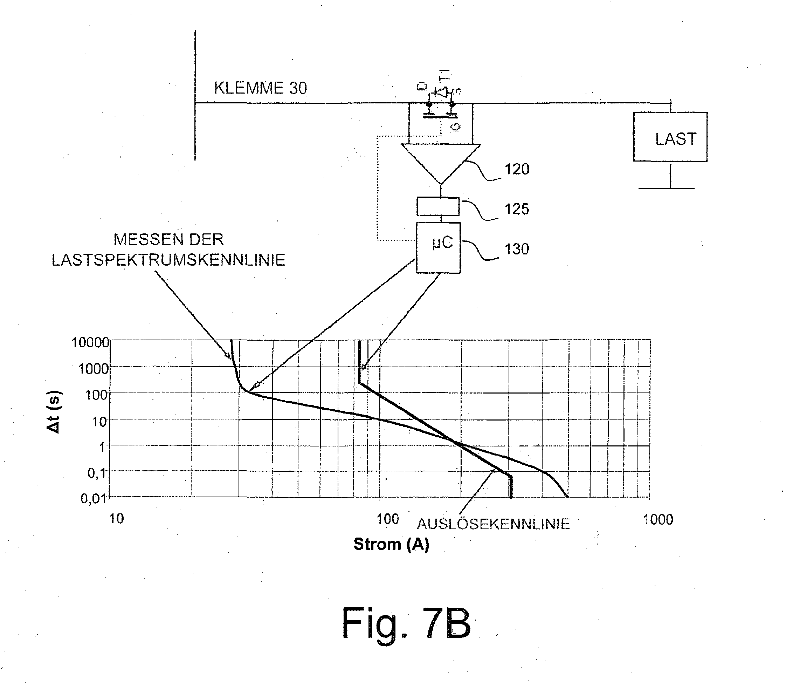

Im Normalbetrieb der Vorrichtung 100 ist das steuerbare Schaltelement 110 in dem zweiten Zustand, so dass Strom ohne oder mit nur einem geringen Widerstand über das Schaltelement 110 fließen kann. Beispielsweise ist der zweite Widerstand $R_2$=Rdson=1m$\Omega$, wie im Beispiel der Figur 7B mit einem Leistungshalbleiter.

Das steuerbare Schaltelement kann beispielsweise ein Leistungshalbleiter sein, insbesondere ein Leistungs-MOSFET, wie in der Patentanmeldung DE 10 2007 062 955 beschrieben. Im Fall eines Leistungs-MOSFETs entspricht der erste Zustand des steuerbaren Schaltelements 110 einem geöffneten Leistungs-MOSFET, so dass der elektrische Widerstand $R_1$ in dem ersten Zustand so groß ist, dass praktisch der gesamte Stromfluss unterbrochen wird. Bei hohen Strömen bietet sich eine Parallelschaltung aus mehreren Leistungs-MOSFETs an, so dass nur Teile des über die Leitung fließenden Stroms über jeweils einen Leistungs-MOSFET fließen. Natürlich können auch andere Feldeffekt-Transistoren verwendet werden anstatt von Metalloxyd-Halbleiter-Feldeffekt-Transistoren (MOSFETs), die über niedrige Gate-Spannungen mit minimaler Verzögerung schaltbar sind.

Die Strommesseinrichtung 120 dient zum Messen eines Stroms auf der Leitung 105. Die Strommesseinrichtung kann dabei kontinuierlich oder in bestimmten Zeitabschnitten den Strom messen und ggf. durch eine A/D-Wandler in ein digitales Signal umwandeln.

Die Mittelungseinrichtung 125 bestimmt, unter Verwendung des gemessenen Stroms, mindestens einen ersten Stromimpuls, der über eine erste Zeitlänge gemittelt wird, und einem zweiten Stromimpuls, der über eine zweite Zeitlänge gemittelt wird. Die gemittelten Stromimpulse basieren auf einer Anzahl von einzelnen durch die Strommesseinrichtung gemessenen Stromimpulsen in einem bestimmten Zeitintervall, dessen Länge die Zeitlänge definiert, z.B. 1s. Die zweite Zeitlänge ist länger ist als die erste Zeitlänge, beispielsweise um einen Faktor 10, so dass durch die unterschiedlichen Zeitlängen unterschiedliche Impulslängen erfasst werden. Die Mittelung über längere Zeiten ist so weniger empfindlich für vereinzelte, kurze sehr hohe Stromimpulse, dafür aber für längere starke Stromimpulse und für eine Abfolge von mehreren kurzen sehr hohen Stromimpulsen im Zeitfenster.

Durch die folgende näher beschriebene Mittelung über verschieden Pulslängen kann ein, wie in Figur 9 gezeigtes Lastprofil in einem Strom-Zeit-Diagramm, das durch die Strommesseinrichtung 120 gemessen wird, aufgetragen werden, wie in Figur 8 gezeigt. Somit kann eine Analyse eines Lastspektrums über eine Mittelung über Impulslängen erfolgen.

In Figur 2 sind vier einzelne mit der Strommesseinrichtung 120 gemessene Stromimpulse mit jeweils einer Breite von 250ms = dt gezeigt. Eine Mittelung durch die Mittelungseinrichtung 125 der vier einzelnen Stromimpulse führt zu einem gemittelten Stromimpuls mit einer Länge $\Delta t$ = n x dt, was einer Dekade von 0 bis 1s entspricht (oder bei Bildung eines laufenden Mittelwerts auch 0,25s bis 1,25s, 0,5 bis 1,5s, usw.). Die gestrichelte Linie stellt den gemittelten Stromimpuls dar und kann bei Bildung eines laufenden Mittelwerts wie ein 1s breites Zeitfenster jeweils um 250ms verschoben werden, so dass eine 4-Punkt-Glättung des Lastprofils realisiert werden kann.

Besonders vorteilhaft ist die Bildung des quadratischen Mittels mehrerer einzelner Stromimpulse über die erste bzw. zweite Zeitlänge. Daher ist die Mittelungseinrichtung 125 bevorzugt ausgebildet als ersten Stromimpuls, das quadratische Mittel mehrerer einzelner Stromimpulse in der ersten Zeitlänge zu erhalten, und/oder als zweiten stromimpuls, das quadratische Mittel mehrerer einzelner Stromimpulse in der zweiten Zeitlänge zu erhalten. Eine solche Mittelung stellt eine energetisch äquivalente Mittelung über Impulslängen dar, wobei die Energie des gemittelten Stromimpulses erhalten werden kann durch

$$W = I_1^2 \times R \times dt + I_2^2 \times R \times dt + \dots I_n^2 \times R \times dt = I_E^2 \times R \times n \times dt,$$

wobei $I_x$ (x = 1, ..., n) die Stromstärke eines einzelnen Impulses in einem bestimmten Zeitintervall ist. Somit kann eine Anzahl von n Stromimpulsen $I_x$ der Länge dt ersetzt werden durch einen gemittelten Stromimpuls der Länge n x dt mit der Stromstärke $I_E$. Dabei errechnet sich $I_E$ aus dem quadratischen Mittel der einzelnen Stromimpulse $I_x$ wie folgt

$$I_E = \sqrt{\left(I_1^2 + I_2^2 + \dots + I_n^2\right)/n}$$

$I_E$ aus den in dem in Figur 2 gezeigten Beispiel verwendeten Stromimpulsen $I_1$, $I_2$, $I_3$, und $I_4$, wird in Figur 2 gestrichelt gezeigt als Stromimpuls, der über $\Delta t$ gemittelt wurde.

Falls $I_E$ als gemittelter erster Stromimpuls bezeichnet wird, kann ein gemittelter zweiter Stromimpuls, beispielsweise von einer Dekade von 0 bis 10s, ähnlich ermittelt werden. Hierbei können beispielsweise 40 einzelne Stromimpulse der Länge 250ms gemittelt werde, bevorzugt quadratisch, oder es könnten auch 10 Stromimpulse der Länge dt = 1s verwendet werden, wobei auch 10 gemittelte erste Stromimpulse mit $\Delta t$ = 1s oder 40 gemittelte erste Stromimpulse verwendet werden können (bei 40 gemittelten ersten Stromimpulsen kann es sich beispielsweise um jeweils um dt = 250ms verschobene, durch Bildung eines laufenden Mittelwerts erhaltene erste Stromimpulse handeln, so dass ein Kaskadieren von Filtern ermöglicht wird).

In dem obigen Beispiel wurde für dt = 250ms angenommen, jedoch können größere oder kleinere Zeitdauern verwendet werden, die nur von den Einstellungen eines Messens und analog-zu-digital Wandelns der Stromwerte in der Leitung abhängen.

Die Steuerung 130 steuert das Schaltelement 110, so dass das Schaltelement 110 in den ersten Zustand schaltet, wenn der erste oder der zweite gemittelte Stromimpuls einen ersten bzw. zweiten Schwellenwert einer Auslösekennlinie überschreitet.

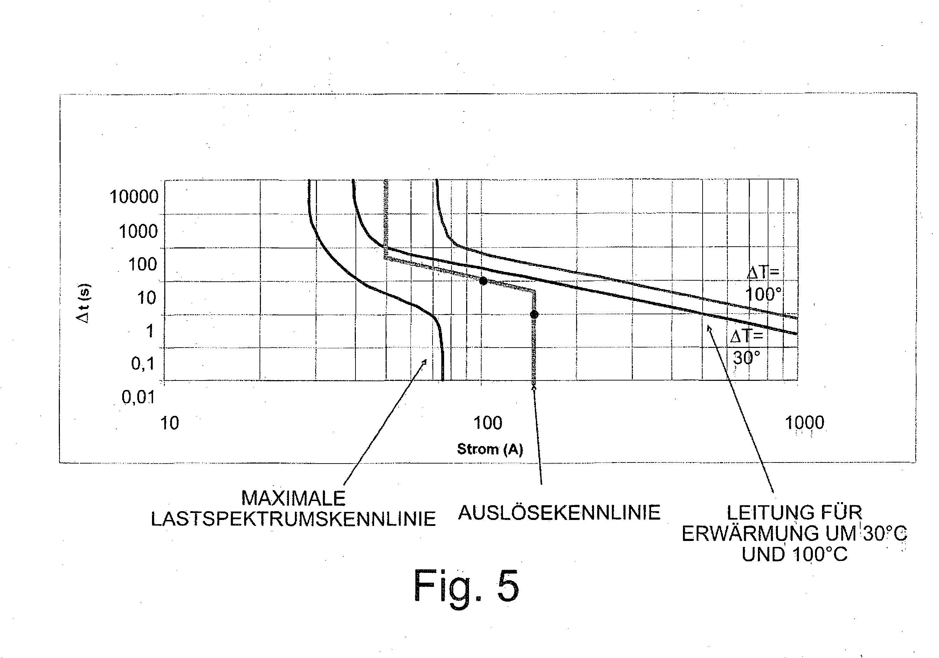

Unter Annahme des oben beschriebenen Beispiels, dass der gemittelte erste Stromimpuls über die Zeitlänge $\Delta t$ = 1s gemittelt wurde und der zweite Stromimpuls über die Zeitlänge $\Delta t$ = 10s gemittelt wurde, werden zwei Schwellenwerte verwendet, wobei der erste Schwellenwert bei einer Stromimpulslängen-Dekade für $\Delta t$ = 1s gesetzt wird und der zweite Schwellenwert für eine andere Impulslängen-Dekade, z.B. $\Delta t$ = 10s, gesetzt wird (siehe die zwei Punkte in Figur 5). Diese Schwellenwerte sind Werte einer Auslösekennlinie in einer Strom-Zeit-Charakteristik wie sie beispielsweise mit Bezug auf Figur 5 näher beschrieben wird.

Eine Auslösekennlinie kann individuell für jede Leitung definiert werden und gibt für verschiedene Impulslängen an, bei welchem Stromwert das Schaltelement schalten soll, um die Leitung zu schützen. Anders ausgedrückt, bedeutet dies, dass die Vorrichtung als Sicherung fungiert und auslöst, indem ein Schalter bzw. das Schaltelement geöffnet wird, so dass ein Stromfluss über die Leitung unterbunden wird.

Die Schwellenwerte der Auslösekennlinie, die darstellt, bei welchen Stromimpulsen das Schaltelement anzusteuern ist bzw. zu schalten ist, werden beispielsweise in einem Speicher gespeichert. Natürlich können die Schwellenwerte auch durch eine fest verdrahtete Schaltung vorgegeben werden, wobei jedoch eine Änderung derselben dann komplizierter ist.

Um einen größeren Bereich mit weiteren Impulslängen abzudecken, kann der Speicher auch ausgebildet sein mehr als zwei, beispielsweise vier oder sechs Schwellenwerte der Auslösekennlinie für vier oder sechs Stromimpulslängendekaden zu speichern. Hierbei können sich die Stromimpulslängendekaden über eine Zeitlänge von 0s bis 0, 01s; 0,1s; 1s; 10s; 100s und 1.000s erstrecken.

In Figur 1 ist die Strommesseinrichtung 120 parallel geschaltet zu dem steuerbaren Schaltelement 110 zum Messen des Stroms über die Leitung 105. Jedoch kann die Strommesseinrichtung 120 auch in Reihe zu dem steuerbaren Schaltelement 110 verbunden werden, um den Strom auf der Leitung 105 zu messen, vor allem wenn der zweite Widerstand $R_2$ einen Wert von nahe 0$\Omega$ annimmt. Das Ergebnis der Strommessung der Strommesseinrichtung 120 wird dann weitergegeben an die Mittelungseinrichtung 125 und dann an die Steuerung 130, die die gemittelten Stromimpulse empfängt und mit den passenden Schwellenwerten der Auslösekennlinie vergleicht. Je nach Zeitlänge, über die gemittelt wurde, können verschiedene Schwellenwerte definiert werden, wie es im Einzelnen mit Bezug auf Figur 5 später beschrieben wird.

Die Strommesseinrichtung kann auch bei verschiedenen Intervallen, kontinuierlich oder periodisch den Strom messen und die Mittelung kann auch in der Strommesseinrichtung oder Steuerung vorgenommen werden, so dass die Mittelungseinrichtung in diesen Einheiten integriert sein kann.

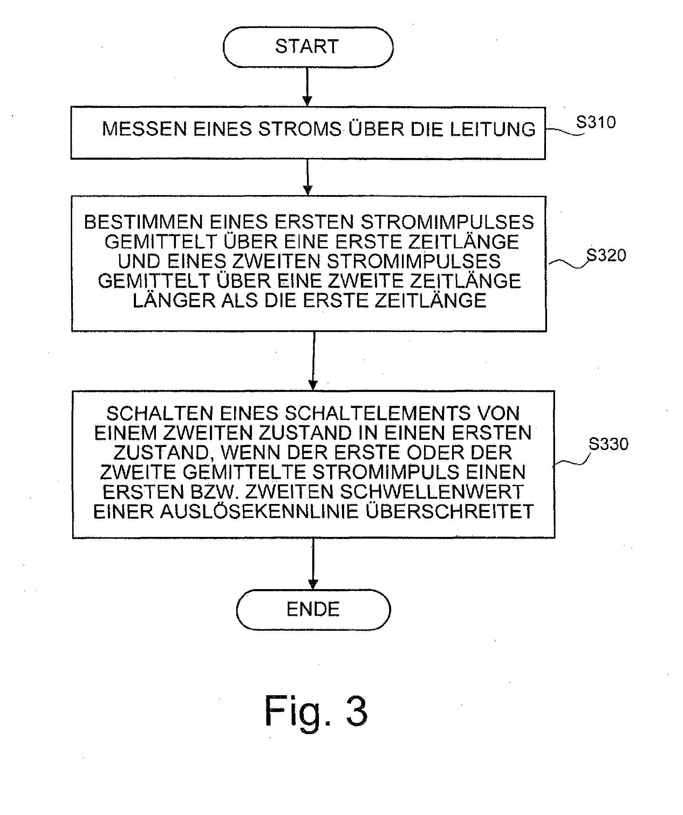

Figur 3 zeigt ein Flussdiagramm mit den Schritten eines Verfahrens zum Absichern einer elektrischen Leitung, insbesondere in einem Fahrzeug, gemäß einer weiteren Ausführungsform. Dabei wird in einem ersten Schritt S310 ein Strom über die Leitung gemessen. Danach wird in Schritt S320 durch Mittelung ein erster Stromimpuls über die Leitung bestimmt, der gemittelt wird über eine erste Zeitlänge. Ferner wird ein zweiter Stromimpuls bestimmt, der über eine zweite Zeitlänge gemittelt wird, die länger als die erste Zeitlänge ist, und bevorzugt ungefähr 10 mal so lang ist wie die erste Zeitlänge, d.h. eine andere Stromimpulslängendekade darstellt.

In einem dritten Schritt S330 schaltet das Schaltelement 110 von einem zweiten Zustand in einen ersten Zustand, wenn der erste oder der zweite gemittelte Stromimpuls einen ersten bzw. zweiten Schwellenwert überschreitet. Insbesondere ist die Steuerung 130 ausgebildet, die ermittelten Stromimpulse von der Strommesseinrichtung 120 zu erhalten und diese mit, beispielsweise in einem Speicher, gespeicherten Schwellenwerten einer Auslösekennlinie, die für die zu sichernde Leitung ausgewählt ist, zu vergleichen.

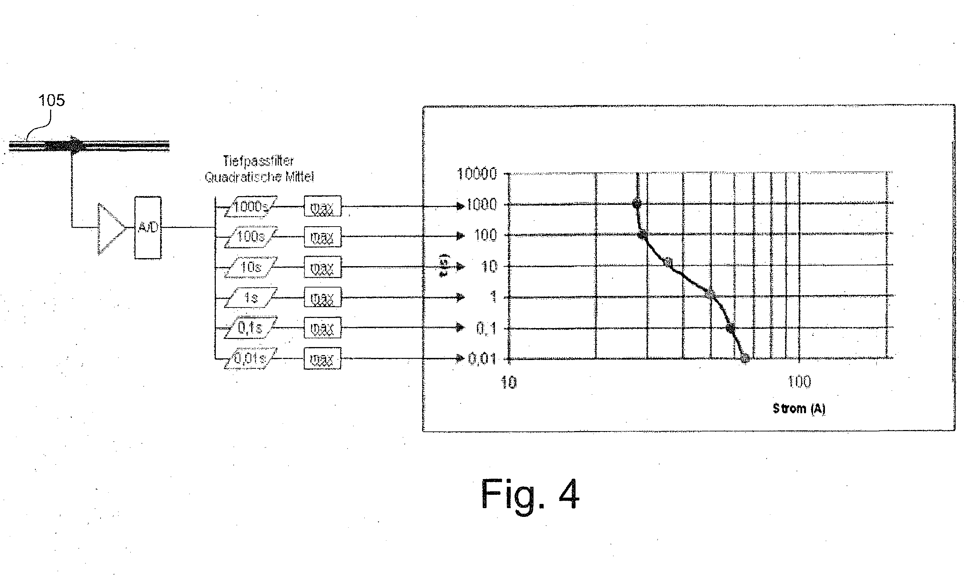

Die Schwellenwerte der Auslösekennlinie, und insbesondere die Auslösekennlinie selbst, können derart gewählt werden, dass sie auf einer Kennlinie der zu sichernden Leitung liegen oder zwischen der Kennlinie der Leitung und einer Lastspektrumskennlinie. Die Lastspektrumskennlinie stellt eine zeitliche Stromverteilung bei den größten zulässigen Strömen in einem Normalbetrieb von mindestens einer Last an der Leitung dar und wird im Folgenden genauer mit Bezug auf Figur 4 beschrieben.

In Figur 4 wird gezeigt, wie eine Lastspektrumskennlinie für ein oder mehrere Lasten, die beispielsweise an einer Bordnetzleitung eines Fahrzeugs angebracht sind, erhalten werden kann. In Figur 4 ist die Leitung 105 der Figur 5 schematisch dargestellt, auf der der Laststrom fließt, beispielsweise ein Laststrom, wie er in dem Laststromprofil der Figur 9 gezeigt ist.

Um die Lastspektrumskennlinie zu erhalten, wird experimentell oder durch theoretische Simulation der Lastverlauf mit den größten zulässigen Strömen, die noch in einem Normalbetrieb, der abgesichert werden soll, vorkommen können, im Zeitbereich I(t) gemessen bzw. ermittelt (siehe z.B. Fig. 9). Der zeitliche Verlauf des Laststroms wird einer laufenden quadratischen Mittelung über 0,01s, 0,1s, 1s, 10s, 100s, und 1000s unterzogen. Dabei kann, wie in Figur 4 gezeigt, der Strom an der Leitung 105 gemessen werden und einer Analog-Digital-Wandlung unterzogen werden und darauf eine quadratische Mittelung unter Verwendung von Tiefpassfiltern durchgeführt werden. Der Maximalwert aus jedem Dekadenfilter wird in das in Figur 4 gezeigt I($\Delta$t)-Diagramm aufgetragen, so dass ein Worst-Case Lastverlauf des Lastspektrums erhalten wird. Es werden also zum Erhalten der in Fig. 4 gezeigten Kennlinie laufende Mittelwerte über das Lastprofil gebildet über verschiedene Zeitfenster 0,01, 0,1s, 1s, 10s, etc. und für jedes Zeitfenster wird der maximale Mittelwert ausgewählt. In anderen Worten ausgedrückt, das Lastprofil wird verschieden stark geglättet mit verschieden großen Zeitfenstern und als Maximalwert wird für jedes Zeitfenster der höchste Wert des geglätteten Lastprofils ausgewählt.

In Fig. 4 wird eine quadratische Mittelung für sechs verschiedene Stromimpulslängendekaden durchgeführt. Wie mit Bezug auf Figur 2 beschrieben, können gemittelte Stromimpulse der Länge n x dt mit der Stromstärke $I_E$ durch Bildung des quadratischen Mittels von einzelnen Stromimpulsen $I_x$ erhalten werden. Die Zeitlänge unterscheidet sich dabei für die verschiedenen Stromimpulslängendekaden, wie vorher für 1s und 10s oben beschrieben wurde. Bevorzugt werden für jede Stromimpulslängendekade mehrere gemittelte Stromimpulse erhalten durch Bilden eines laufenden Mittelwerts über den zeitlichen Verlauf des Laststroms.

Im Fall der Stromimpulslängendekade bezüglich 1s kann beispielsweise, wie vorher erklärt ein Zeitfenster von 1s Länge um 250ms verschoben werden für jede Messung an der Leitung 10-5, die alle 250ms erfolgt. Dies kann für mehrere Sekunden oder Minuten durchgeführt werden, so dass verschiedene gemittelte Stromimpulse für diese Dekade erhalten werden, wobei der Maximalwert aus dem Filter für die Dekade is in das I($\Delta$t) Diagramm aufgetragen wird, hier 50A. Das gleiche Prinzip kann für die anderen Stromimpulslängendekaden verwendet werden, so dass eine zeitliche Stromverteilung bei den größten zulässigen Strömen in einem Normalbetrieb als Lastspektrumskennlinie durch Verbinden der Maximalwerte oder extrapolieren der Maximalwerte erhalten werden kann.

In dem in Figur 4 gezeigten Beispiel wird eine Lastspektrumskennlinie bestimmt über Bestimmung von laufenden quadratischen Mittelwerten in sechs Stromimpulslängendekaden. Abhängig von denen an einer Leitung angeschlossenen Lasten kann es auch ausreichend sein, dass weniger als sechs Stromimpulslängendekaden verwendet werden oder auch mehr als sechs Stromimpulslängendekaden, wobei auch andere zu der quadratischen Mittelung unterschiedliche Mittelungen verwendet werden können.

Die in einem I($\Delta$t)-Diagramm aufgetragene Lastspektrumskennlinie kann nun dazu verwendet werden, eine Leitung auszuwählen, die die maximalen Stromimpulse, gemittelt über die oben beschriebenen verschiedenen Zeiten, tragen kann, ohne dass harte oder kriechende Kurzschlüsse auftreten oder die Leitung anderweitig stark beansprucht wird und die Lebensdauer derselben verringert wird. In Figur 5 ist eine Leitung für Erwärmungen um 30°C und 100°C gezeigt. Diese Leitung ist in dem Diagramm rechts der Lastspektrumslinie, was bedeutet, dass die maximalen Ströme der Lastspektrumskennlinie die Leitung nicht beschädigen können, da diese für höhere Ströme ausgelegt ist.

Zur Absicherung der Leitung wird nun eine Auslösekennlinie definiert, die mindestens teilweise zwischen der Kennlinie der Leitung und der Lastspektrumskennlinie liegt und auch teilweise auf der Kennlinie der abzusichernden elektrischen Leitung liegen kann. Die zwei in Figur 5 auf der Auslösekennlinie gezeigten Punkte sind Beispiele für einen ersten und zweiten Schwellenwert, die mit Bezug auf Figur 1 beschrieben wurden.

Kurz zusammengefasst, wird also ein Mittelwert durch quadratische Mittelung für alle Stromimpulslängendekaden bestimmt für einen maximalen Worst-Case Lastverlauf zum festlegen der Lastspektrumskennlinie. Dann wird eine Leitung mit einem sicheren Querschnitt, beispielsweise 4mm² rechts in dem Diagramm in Figur 5 bestimmt und dann eine Auslösekennlinie mindestens teilweise zwischen der Leitungskennlinie und der Lastspektrumskennlinie definiert. Im Betrieb der Lasten, beispielsweise Normalbetrieb eines Fahrzeugs, werden gemittelte Stromimpulse gemessen und mit den Maximalwerten der Dekaden, die die Lastspektrumskennlinie darstellen, verglichen, und wenn ein Stromimpuls, gemittelt über eine bestimmte Zeitlänge, größer ist als der dieser Zeitlänge zugeordnete Schwellenwert der Lastspektrumskennlinie, wird das Schaltelement geöffnet und die Leitung unterbrochen.

Somit kann, wie in Figur 5 gezeigt, eine intelligente Sicherung mit angepasster Auslösekennlinie realisiert werden. Beispielsweise könnte eine 60A Midi-Schmelzsicherung bei kriechenden Kurzschlüssen die in Figur 5 gezeigte Leitung nicht absichern und die Leitung würde versagen, bevor die Sicherung auslöst. Die Auslösekennlinie ist derart ausgelegt, dass für kurze Impulslängen zwischen 0,01 und 1s bei einer Überschreitung von 150A und für lange Impulslängen zwischen 100s und 10000s bei einer Überschreitung von 50A das Schaltelement schaltet und so die Leitung absichert.

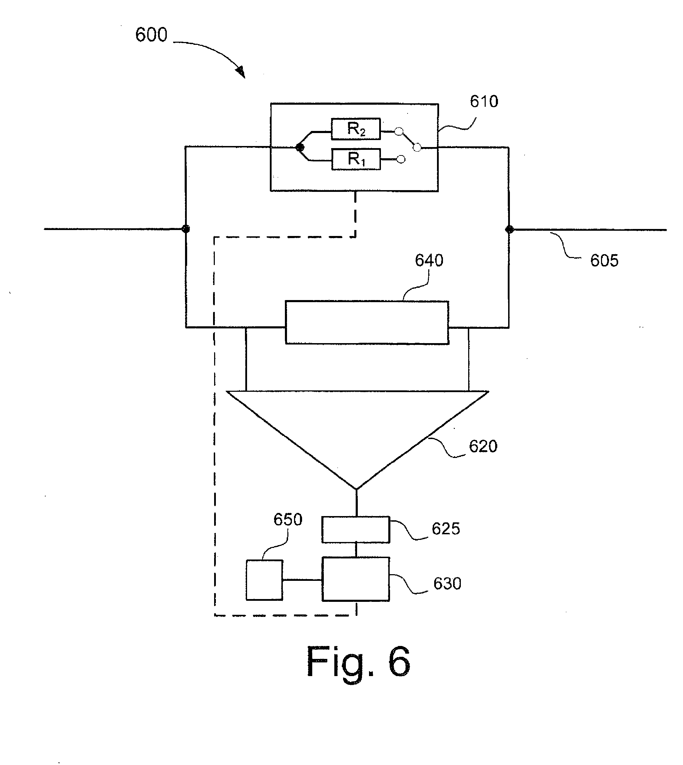

In Figur 1 wurde das steuerbare Schaltelement 110 in Reihe verbunden mit der elektrischen Leitung gezeigt. In einer anderen Ausführungsform kann die Vorrichtung ferner eine Sicherung zum Absichern der elektrischen Leitung umfassen, beispielsweise eine elektrische Sicherung wie eine Schmelzsicherung oder PTC-Sicherung. Eine solche Vorrichtung mit Sicherung ist in Figur 6 gezeigt. Die Vorrichtung 600 in Figur 6 umfasst ein steuerbares Schaltelement 610, das weitgehend dem Schaltelement 110 von Figur 1 entspricht, und eine elektrische Sicherung 640, sowie eine Strommesseinrichtung 620, eine Mittelungseinrichtung 625 und eine mit einem Speicher 650 verbundene Steuerung 630, die weitgehend den in Fig. 1 beschriebenen Einheiten entsprechen. Der Speicher 650 kann auch in der Steuerung 630 vorgesehen werden. Das steuerbare Schaltelement 610 und die elektrische Sicherung 640 sind als Parallelschaltung ausgebildet, wobei die Parallelschaltung in Reihe verbunden ist mit der elektrischen Leitung 605.

Insbesondere ist die elektrische Sicherung 640 in einem ersten Zweig der Parallelschaltung angeordnet, der einen dritten Widerstand $R_3$ aufweist und das steuerbare Schaltelement 610 ist in einem zweiten Zweig der Parallelschaltung angeordnet. Der erste Widerstand $R_1$, in dem Schaltelement 610 ist höher als der dritte Widerstand und der zweite Widerstand in dem Schaltelement ist niedriger als der dritte Widerstand. Das Schaltelement kann derart geschaltet werden, dass bei einer Impulslastbedingung in den zweiten Zustand geschaltet wird, so dass die Sicherung 640 entlastet wird. Unter Impulslastbedingung wird hier ein Stromimpuls verstanden, der für die Sicherung zu groß wäre, und diese auslösen würde, aber von der Leitung selbst noch getragen werden könnte. Somit handelt es sich bei der Impulslastbedingung um keine Überlast der Leitung.

Im Normalbetrieb der Vorrichtung 600 der Figur 6 ist das Schaltelement 610 so geschaltet, dass das Schaltelement den ersten Widerstand $R_1$ annimmt. Beispielsweise kann das Schaltelement ein Schalter sein, wobei der widerstand $R_1$ einem geöffneten Zustand, d.h. einem unendlichen Widerstand, und der Widerstand $R_2$ einem geschlossenen Zustand, d.h. einem sehr kleinen Widerstand, entspricht. Deshalb fließt im Normalbetrieb der elektrische Strom der elektrischen Leitung 605 durch die Sicherung 640.

Eine Impulslastbedingung liegt beispielsweise vor, wenn ein durch die Parallelschaltung fließender Strom, bzw. ein daraus resultierender gemittelter Stromimpuls, einen Impulslast-Schwellenwert überschreitet. Dieser Stromimpuls kann die Sicherung zum Auslösen bringen, beispielsweise zum Schmelzen, muss jedoch nicht gefährlich sein für die Leitung, da Sicherungen und Leitungen unterschiedliche Eigenschaften besitzen, was mit Bezug auf Figur 8 diskutiert wurde. Somit kann bei vorliegender Impulslastbedingung das Schaltelement 610 in den zweiten Zustand schalten, für den der elektrische Widerstand $R_2$ geringer ist als der elektrische Widerstand $R_3$ der elektrischen Sicherung. Dies erfolgt über die Verwendung eines Schalters durch Einschalten desselben. In diesem zweiten Zustand des steuerbaren Schaltelements 610 fließt aufgrund von $R_2 < R_3$ der Hauptteil des elektrischen Stroms durch die elektrische Leitung im Zweig des Schaltelements 610 und nur ein geringer Teil des elektrischen Stroms durch die elektrische Sicherung, wodurch diese bei Vorliegen einer Impulslastbedingung entlastet wird. Mit anderen Worten kann das steuerbare Schaltelement 610, vorzugsweise ein Leistungs-MOSFET, bei einem Stromimpuls diese Stromlast zum Großteil übernehmen.

Die Vorrichtung 600 kann auch wieder in den Normalbetrieb zurückkehren. Beispielsweise kann das Schaltelement ausgebildet sein von dem zweiten Zustand in den ersten Zustand zu schalten, wenn ein anderer Impulslast-Schwellenwert des durch die Parallelschaltung fließenden Stroms unterschritten wird.

Ferner kann das Schaltelement 610 ausgebildet sein, bei einer Überlastbedingung von dem zweiten Zustand in den ersten Zustand zu schalten, so dass ein Schmelzen bzw. Durchbrennen der elektrischen Sicherung bewirkt werden kann. Im Gegensatz zu der oben erwähnten Impulslastbedingung für die elektrische Sicherung, insbesondere für kurzzeitige starke Ströme, handelt es sich bei der Überlastbedingung um eine Impulslastbedingung für eine bestimmte Zeitdauer bzw. Zeitlänge, d.h. die Überlastbedingung der elektrischen Leitung 605 liegt vor, wenn im Allgemeinen ein bestimmter hoher elektrischer Strom für eine zu lange Zeit durch die elektrische Leitung 605 fließt. Da die Auslösekennlinie definiert wird unter Berücksichtigung der von der Leitung tragbaren Stromimpulse und insbesondere deren Zeitlängen, kann die Auslösekennlinie zur Entscheidung, ob ein Überlastbedingungsfall vorliegt, verwendet werden. Die Auslösekennlinie oder einzelne Schwellenwerte für verschiedene Stromimpulslastdekaden können in dem Speicher 650 gespeichert werden.

Bevorzugt können die Vorrichtung 100 oder die Vorrichtung 600 in einem Bordnetz eines Fahrzeugs, insbesondere einem Automobil, zur Absicherung einer elektrischen Leitung verwendet werden. Die Absicherung der elektrischen Leitung im Bordnetz eines Fahrzeugs kann auf der Lastebene (SRB-Ebene) oder der Hauptverteilerebene (Vosido-Ebene) erfolgen.

Die Vorrichtung 600 zum Absichern einer elektrischen Leitung 605 weist gegenüber einer Absicherung über nur einen Leistungs-MOSFET ohne parallele Schmelzsicherung weitere Vorteile auf, z.B. wird, wenn bei einem harten Kurzschluss der Leistungs-MOSFET (oder anderer Leistungshalbleiter) die Verbindung trennt, eine hohe Spannung induziert, die den Leistungs-MOSFET zerstören kann. Diese Energie müsste in einer zusätzlichen Freilaufdiode abgebaut werden. In der Vorrichtung 600 übernimmt die Sicherung, z.B. Schmelzsicherung, die Energie-, z.B. durch Aufschmelzen des Sicherungsmaterials. Der Leistungs-MOSFET (Schaltelement) wird somit beim Auslösen durch die Schmelzsicherung vor induzierten Spannungen geschützt.

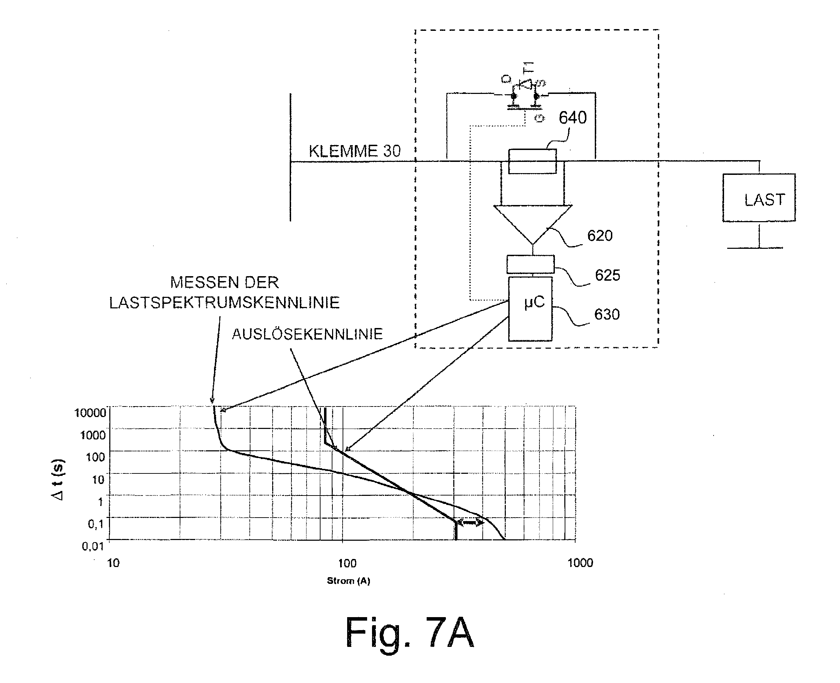

Im Folgenden wird der Betrieb der Vorrichtungen 100 und 600 mit Bezug auf die Figuren 7A und 7B beschrieben.

In Figur 7A wird der Betrieb der Vorrichtung 600 beschrieben, wobei das steuerbare Schaltelement 610 nun als Leistungshalbleiter mit einem Widerstand $R_2 = 1m\Omega$ und einem Widerstand $R_1$ von ungefähr unendlich ausgebildet ist. Folglich fließt bei einem Schließen des Leistungshalbleiters (Leistungs-MOSFETs) T1 der Hauptteil des elektrischen Stroms der elektrischen Leitung durch den Leistungshalbleiter und die Schmelzsicherung wird entlastet. Auf der anderen Seite weist der Leistungshalbleiter T1 beim Öffnen dessen Gates einen solch hohen elektrischen Widerstand $R_1$ auf, dass praktisch der gesamte Teil des elektrischen Stroms der elektrischen Leitung durch die Sicherung 640 geht. Im Betrieb werden nun immer Werte einer Lastspektrumskennlinie des Betriebs (nicht zu verwechseln mit der vorher beschriebenen vorbestimmten maximalen Lastspektrumskennlinie) durch die Strommesseinrichtung 620 und Mittelungseinrichtung 625 ermittelt. Diese Werte stellen Stromimpulse über die Leitung dar, die über verschiedene Zeitlängen, wie z.B. die in Figur 7A gezeigten Dekaden, gemittelt werden.

Die Steuerung 630, die als Microcontroller ausgebildet sein kann, vergleicht dann die gemessenen gemittelten Stromimpulse der Lastspektrumskennlinie mit Werten der vorbestimmten gespeicherten Auslösekennlinie, und falls die ermittelten Stromimpulse der Dekadenfilter über den Werten der Auslösekennlinie liegen, wird die Sicherung ausgelöst, d.h. der Leistungshalbleiter wird geöffnet und die Schmelzsicherung wird einem hohen Strom ausgesetzt, der diese im Normalfall zum Durchschmelzen bringt. Somit stellt die Auslösekennlinie im Allgemeinen ein Kriterium für die Unterbrechung der Leitung dar.

In Figur 7A wird beispielsweise bei Stromimpulsen größer als 200A und einer Zeitlänge von 1s der Leistungshalbleiter geöffnet. Insbesondere wird der Leistungshalbleiter für alle auf der gemessenen Lastspektrumskennlinie liegenden Stromimpulse oder noch stärkere geöffnet, die kürzer sind als 1s, wie es durch den Pfeil in Figur 7A gezeigt ist.

In Figur 7B wird der Betrieb der Vorrichtung 100 beschrieben, in der das Schaltelement auch als Leistungshalbleiter ausgebildet ist. Auch hier werden, wie bei Figur 7A, bei Betrieb der Lasten verschiedene gemittelte Stromimpulse gemessen und mit Werten der Auslösekennlinie verglichen. Das Auslösekriterium, so dass der Leistungshalbleiter schaltet, ist das gleiche in Figur 7B wie in Figur 7A.

Bei der Verwendung in einem Bordnetz in einem Fahrzeug bietet die Vorrichtung 600 gegenüber der Vorrichtung 100 den Vorteil, dass bei einem stehenden Fahrzeug der Leistungshalbleiter nicht durchgeschaltet sein muss, da kleine Ströme über die Sicherung fließen können, die eine auf Gleichlast dimensionierte kleine Sicherung darstellt.

Wie oben gezeigt, erlaubt somit die Bestimmung der maximalen Lastspektrumskennlinie die vollständige energetische Beschreibung einer oder mehrere Lasten mit nur wenigen Werten, beispielsweise sechs Werte, die die Stützpunkte der Dekaden darstellen. Hier bilden Lastspektren die Basis zur optimalen Auslegung von Leitungen und Sicherungen, was vorteilhaft ist, da Impulslasten nicht über Nennströme beschrieben werden können, die bei der bisherigen Auslegung von Käbelsätzen im Zeitbereich und nicht im Spektralbereich der Impulslängen verwendet wurden. Zusätzlich kann durch eine Lastspektrumsanalyse eine langsame Änderung des Lastprofils auf Alterungsprozesse hinweisen. Beispielsweise kann so ein Festfressen eines Lagers in einem Gebläsemotor bemerkt werden, und es können rechtzeitig Diagnosebits gesetzt werden.

Ferner wurde die Erfindung mit Bezug auf bestimmte Beispiele beschrieben, die jedoch nur zum verbesserten Verständnis der Erfindung dienen sollen, und diese nicht einschränken sollen. Der Fachmann erkennt auch sofort, dass viele verschiedene Kombinationen der Elemente zur Ausführung der vorliegenden Erfindung verwendet werden können. Deshalb wird der wahre Umfang der Erfindung durch die folgenden Ansprüche gekennzeichnet.

**Patentansprüche**

1. Vorrichtung zum Absichern einer elektrischen Leitung (105, 605) in einem Bordnetz eines Fahrzeugs, umfassend:

    ein einen Leistungshalbleiter umfassendes steuerbares Schaltelement (110, 610), das ausgebildet ist mindestens zwei Zustände anzunehmen, einen ersten Zustand mit einem ersten Widerstand und einen zweiten Zustand mit einem zweiten Widerstand niedriger als der erste Widerstand;
    eine Strommesseinrichtung (120, 620) zum Messen eines Stroms über die Leitung;
    **dadurch gekennzeichnet, daß** sie weiter umfaßt:
    eine Mittelungseinrichtung (125, 625) zum Bestimmen auf Grundlage des gemessenen Stroms mindestens eines ersten Stromimpulses, gemittelt über eine erste Zeitlänge und eines zweiten Stromimpulses, gemittelt über eine zweite Zeitlänge länger als die erste Zeitlänge, so dass durch die unterschiedlichen Zeitlängen unterschiedliche Impulslängen erfasst werden; und
    eine Steuerung (130, 630) zum Steuern des Schaltelements, so dass das Schaltelement in den ersten Zustand schaltet, wenn der erste oder der zweite gemittelte Stromimpuls einen ersten bzw. zweiten Schwellenwert überschreitet.

2. Vorrichtung nach Anspruch 1, wobei die Mittelungseinrichtung (125, 625) ausgebildet ist als ersten Stromimpuls, das quadratische Mittel mehrerer einzelner Stromimpulse in der ersten Zeitlänge zu erhalten, und/oder ausgebildet ist als zweiten Stromimpuls, das quadratische Mittel mehrerer einzelner Stromimpulse in der zweiten Zeitlänge zu erhalten.

3. Vorrichtung nach Anspruch 1 oder 2, umfassend einen Speicher (650) zum Speichern des ersten und zweiten Schwellenwerts einer Auslösekennlinie, die darstellt bei welchen Stromimpulsen das Schaltelement anzusteuern ist.

4. Vorrichtung nach Anspruch 3, wobei der Speicher (650) ausgebildet ist mindestens vier Schwellenwerte der Auslösekennlinie für vier verschiedene Stromimpulslängendekaden zu speichern,
wobei sich die vier Stromimpulslängendekaden bevorzugt über eine Zeitlänge von 0s bis 0,01s; 0,1s; 10s bzw. 100s erstrecken.

5. Vorrichtung nach einem der Ansprüche 1 bis 4, wobei die Auslösekennlinie mindestens teilweise der Kennlinie der abzusichernden elektrischen Leitung entspricht.

6. Vorrichtung nach einem der Ansprüche 1 bis 5, wobei das steuerbare Schaltelement in Reihe mit der elektrischen Leitung (105, 605) verbindbar ist.

7. Vorrichtung nach einem der Ansprüche 1 bis 5, ferner umfassend eine elektrische Sicherung (640) zum Absichern der elektrischen Leitung.

8. Vorrichtung nach Anspruch 7, wobei das steuerbare Schaltelement (610) und die elektrische Sicherung (640) als Parallelschaltung ausgebildet sind, und die Parallelschaltung in Reihe mit der elektrischen Leitung verbindbar ist.

9. Vorrichtung nach Anspruch 8, wobei die elektrische Sicherung (640) in einem ersten Zweig der Parallelschaltung angeordnet ist, der einen dritten Widerstand aufweist und das steuerbare Schaltelement (610) in einem zweiten Zweig der Parallelschaltung angeordnet ist,
wobei der erste Widerstand höher als der dritte Widerstand ist und der zweite Widerstand niedriger als der dritte Widerstand ist, und das Schaltelement ausgebildet ist bei einer Impulslastbedingung in den zweiten Zustand zu schalten oder in dem zweiten Zustand zu bleiben,
wobei die Impulslastbedingung bevorzugt eine Überschreitung eines Impulslast-Schwellenwerts des durch die Parallelschaltung fließenden gemittelten Stromimpulses darstellt.

10. Vorrichtung nach Anspruch 9, wobei das steuerbare Schaltelement ausgebildet ist bei einer Überlastbedingung von dem zweiten Zustand in den ersten Zustand zu schalten.

11. Vorrichtung nach Anspruch 9, wobei das steuerbare Schaltelement (610) ausgebildet ist von dem zweiten Zustand in den ersten Zustand zu schalten, wenn ein zweiter Impulslast-Schwellenwert des durch die Parallelschaltung fließenden gemittelten Stromimpulses unterschritten wird.

**12.** Vorrichtung nach einem der Ansprüche 1 bis 11, wobei die Strommesseinrichtung (120, 620) mit dem Schaltelement und/oder der elektrischen Sicherung in Reihe geschaltet ist, zum Messen der Stromimpulse.

**13.** Bordnetz zur Stromversorgung eines Fahrzeugs mit einer Vorrichtung nach einem der Ansprüche 1 bis 12.

**14.** Verfahren zum Absichern einer elektrischen Leitung in einem Bordnetz eines Fahrzeugs, umfassend die Schritte:

Messen eines Stroms über die Leitung;
Bestimmen auf Grundlage des gemessenen Stroms mindestens eines ersten Stromimpulses, gemittelt über eine erste Zeitlänge und eines zweiten Stromimpulses, gemittelt über eine zweite Zeitlänge länger als die erste Zeitlänge, so dass durch die unterschiedlichen Zeitlängen unterschiedliche Impulslängen erfasst werden; und Schalten eines einen Leistungshalbleiter umfassendes Schaltelements von einem zweiten Zustand in einen ersten Zustand, wenn der erste oder der zweite gemittelte Stromimpuls einen ersten bzw. zweiten Schwellenwert überschreitet,
wobei der erste Zustand einen ersten Widerstand aufweist und der zweite Zustand einen zweiten Widerstand aufweist, der niedriger als der erste Widerstand ist.

**15.** Verfahren nach Anspruch 14, wobei die Schwellenwerte einer Auslösekennlinie derart gewählt werden, dass sie auf einer Kennlinie der Leitung oder zwischen Werten der Kennlinie und einer Lastspektrumskennlinie liegen, die eine zeitliche Stromverteilung bei den größten zulässigen Strömen in einem Normalbetrieb von mindestens einer Last an der Leitung darstellt.

**Claims**

**1.** Apparatus for safeguarding an electrical line (105, 605) in an on-board electrical power supply system of a vehicle, comprising:

a controllable switching element (110, 610) comprising a power semiconductor and designed to assume at least two states, a first state with a first resistance and a second state with a second resistance lower than the first resistance;
a current measuring device (120, 620) for measuring a current via the line;
**characterized in that** it furthermore comprises:

an averaging device (125, 625) for determining on the basis of the measured current at least one first current pulse, averaged over a first time length, and a second current pulse, averaged over a second time length longer than the first time length, such that different pulse lengths are acquired by means of the different time lengths; and
a controller (130, 630) for controlling the switching element, such that the switching element switches into the first state if the first or the second averaged current pulse exceeds a first or second threshold value, respectively.

**2.** Apparatus according to Claim 1, wherein the averaging device (125, 625) is designed to obtain as first current pulse the quadratic mean of a plurality of individual current pulses in the first time length, and/or is designed to obtain as second current pulse the quadratic mean of a plurality of individual current pulses in the second time length.

**3.** Apparatus according to Claim 1 or 2, comprising a memory (650) for storing the first and second threshold values of a tripping characteristic curve that indicates for which current pulses the switching element is to be driven.

**4.** Apparatus according to Claim 3, wherein the memory (650) is designed to store at least four threshold values of the tripping characteristic curve for four different current length decades, wherein the four current pulse length decades preferably extend over a time length of 0 s to 0.01 s; 0.1 s; 10 s and 100 s, respectively.

**5.** Apparatus according to any of Claims 1 to 4, wherein the tripping characteristic curve at least partly corresponds to the characteristic curve of the electrical line to be safeguarded.

**6.** Apparatus according to any of Claims 1 to 5, wherein the controllable switching element is connectable in series with the electrical line (105, 605).

7. Apparatus according to any of Claims 1 to 5, furthermore comprising an electrical fuse (640) for safeguarding the electrical line.

8. Apparatus according to Claim 7, wherein the controllable switching element (610) and the electrical fuse (640) are designed as a parallel circuit, and the parallel circuit is connectable in series with the electrical line.

9. Apparatus according to Claim 8, wherein the electrical fuse (640) is arranged in a first branch of the parallel circuit, said first branch having a third resistance, and the controllable switching element (610) is arranged in a second branch of the parallel circuit,
wherein the first resistance is higher than the third resistance and the second resistance is lower than the third resistance, and the switching element is designed, in the event of a pulse load condition, to switch into the second state or to remain in the second state,
wherein the pulse load condition preferably constitutes an exceedance of a pulse load threshold value of the averaged current pulse flowing through the parallel circuit.

10. Apparatus according to Claim 9, wherein the controllable switching element is designed, in the event of an overload condition, to switch from the second state into the first state.

11. Apparatus according to Claim 9, wherein the controllable switching element (610) is designed to switch from the second state into the first state if a second pulse load threshold value of the averaged current pulse flowing through the parallel circuit is undershot.

12. Apparatus according to any of Claims 1 to 11, wherein the current measuring device (120, 620) is connected in series with the switching element and/or the electrical fuse, for the purpose of measuring the current pulses.

13. On-board electrical power supply system for the power supply of a vehicle comprising an apparatus according to any of Claims 1 to 12.

14. Method for safeguarding an electrical line in an on-board electrical power supply system of a vehicle, comprising the following steps:

measuring a current via the line;
determining on the basis of the measured current at least one first current pulse, averaged over a first time length, and a second current pulse, averaged over a second time length longer than the first time length, such that different pulse lengths are acquired by means of the different time lengths; and
switching a switching element comprising a power semiconductor from a second state into a first state if the first or the second averaged current pulse exceeds a first or second threshold value, respectively,
wherein the first state has a first resistance and the second state has a second resistance, which is lower than the first resistance.

15. Method according to Claim 14, wherein the threshold values of a tripping characteristic curve are chosen in such a way that they lie on a characteristic curve of the line or between values of the characteristic curve and a load spectrum characteristic curve which represents a temporal current distribution in the case of the maximum permissible currents in normal operation of at least one load on the line.

**Revendications**

1. Ensemble de protection d'un conducteur électrique (105, 605) du réseau de bord d'un véhicule, comprenant :

un élément de commutation (110, 610) asservi comprenant un semi-conducteur de puissance, configuré pour prendre au moins deux états, à savoir un premier état présentant une première résistance et un deuxième état présentant une deuxième résistance plus basse que la première résistance et
un dispositif (120, 620) de mesure de courant qui mesure le courant qui traverse le conducteur, **caractérisé en ce que**
l'ensemble comprend en outre un dispositif (125, 625) de formation de moyenne qui détermine sur la base du courant mesuré, au moins une première impulsion de courant dont la moyenne est formée sur une première durée et d'une deuxième impulsion de courant dont la moyenne est formée sur une deuxième durée, plus longue que la première durée, de telle sorte que des longueurs d'impulsion différentes soient saisies par les durées différentes et

**en ce qu'**une commande (130, 630) commande l'élément de commutation de telle sorte que l'élément de commutation bascule dans le premier état lorsque la première ou la deuxième impulsion de courant moyenne dépasse une première ou une deuxième valeur de seuil.

2. Ensemble selon la revendication 1, dans lequel le dispositif (125, 625) de formation de moyenne est configuré comme première impulsion de courant pour recevoir la moyenne quadratique de plusieurs impulsions de courant distinctes pendant la première durée et/ou est configuré comme deuxième impulsion de courant pour recevoir la moyenne quadratique de plusieurs impulsions de courant distinctes au cours de la deuxième durée.

3. Ensemble selon les revendications 1 ou 2, comprenant une mémoire (650) qui conserve la première et la deuxième valeur de seuil d'une ligne caractéristique de déclenchement qui représente à quelles impulsions de courant l'élément de commutation doit être commandé.

4. Ensemble selon la revendication 3, dans lequel la mémoire (650) est configurée pour conserver au moins quatre valeurs de seuil de la ligne caractéristique de déclenchement pour quatre décades différentes de longueur d'impulsion de courant, les quatre décades de longueur d'impulsion de courant s'étendant de préférence sur une durée de 0 s à 0,01 s, de 0,1 s, de 10 s ou de 100 s.

5. Ensemble selon l'une des revendications 1 à 4, dans lequel la ligne caractéristique de déclenchement correspond au moins en partie à la ligne caractéristique du conducteur électrique qui doit être protégé.

6. Ensemble selon l'une des revendications 1 à 5, dans lequel l'élément de commutation asservi peut être raccordé en série au conducteur électrique (105, 605).

7. Ensemble selon l'une des revendications 1 à 5, comprenant en outre une protection électrique (640) qui protège le conducteur électrique.

8. Ensemble selon la revendication 7, dans lequel l'élément de commutation (610) asservi et la protection électrique (640) sont configurés comme circuits parallèles, le circuit parallèle pouvant être raccordé en série au conducteur électrique.

9. Ensemble selon la revendication 8, dans lequel la protection électrique (640) est disposée dans une première branche du circuit parallèle qui présente une troisième résistance, l'élément de commutation asservi (610) étant disposé dans une deuxième branche du circuit parallèle,
la première résistance étant supérieure à la troisième résistance et la deuxième résistance étant plus basse que la troisième résistance, l'élément de commutation étant configuré pour commuter dans le deuxième état ou de rester dans le deuxième état lors d'une condition de charge d'impulsion, la condition de charge d'impulsion représentant de préférence un dépassement d'une valeur de seuil de charge d'impulsion de l'impulsion de courant moyenne qui traverse le circuit parallèle.

10. Ensemble selon la revendication 9, dans lequel l'élément de commutation asservi est configuré pour commuter du deuxième état au premier état dans une condition de surcharge.

11. Ensemble selon la revendication 9, dans lequel l'élément de commutation asservi (610) est configuré pour commuter du deuxième état dans le premier état si une deuxième valeur de seuil de charge d'impulsion de l'impulsion de courant moyenne qui traverse le circuit parallèle n'est pas atteinte.

12. Ensemble selon l'une des revendications 1 à 11, dans lequel le dispositif (120, 620) de mesure de courant est raccordé en série à l'élément de commutation et/ou à la protection électrique pour mesurer l'impulsion de courant.

13. Réseau de bord alimentant en courant un véhicule et doté d'un ensemble selon l'une des revendications 1 à 12.

14. Procédé de protection d'un conducteur électrique du réseau de bord d'un véhicule, le procédé comportant les étapes qui consistent à :

mesurer un courant dans le conducteur,

déterminer sur la base du courant mesuré au moins une première impulsion de courant dont la moyenne est formée sur une première durée et d'une deuxième impulsion de courant dont la moyenne est formée sur une deuxième durée plus longue que la première durée, de telle sorte que des longueurs d'impulsion différentes soient saisies par les durées différentes et

commuter un élément de commutation comprenant un semi-conducteur de puissance d'un deuxième état à un premier état si la première ou la deuxième impulsion de courant moyenne dépasse une première ou une deuxième valeur de seuil,

le premier état présentant une première résistance et le deuxième état une deuxième résistance plus basse que la première résistance.

15. Procédé selon la revendication 14, dans lequel les valeurs de seuil d'une ligne caractéristique de déclenchement sont sélectionnées de telle sorte qu'elles soient situées sur une ligne caractéristique du conducteur ou entre des valeurs de la ligne caractéristique et d'une ligne caractéristique de spectre de charge qui représente une répartition du courant dans le temps au plus grand courant admissible du fonctionnement normal d'au moins une charge sur le conducteur.

# Fig. 1

# Fig. 2

START

MESSEN EINES STROMS ÜBER DIE LEITUNG — S310

BESTIMMEN EINES ERSTEN STROMIMPULSES GEMITTELT ÜBER EINE ERSTE ZEITLÄNGE UND EINES ZWEITEN STROMIMPULSES GEMITTELT ÜBER EINE ZWEITE ZEITLÄNGE LÄNGER ALS DIE ERSTE ZEITLÄNGE — S320

SCHALTEN EINES SCHALTELEMENTS VON EINEM ZWEITEN ZUSTAND IN EINEN ERSTEN ZUSTAND, WENN DER ERSTE ODER DER ZWEITE GEMITTELTE STROMIMPULS EINEN ERSTEN BZW. ZWEITEN SCHWELLENWERT EINER AUSLÖSEKENNLINIE ÜBERSCHREITET — S330

ENDE

# Fig. 3

Fig. 4

MAXIMALE
LASTSPEKTRUMSKENNLINIE   AUSLÖSEKENNLINIE   LEITUNG FÜR
ERWÄRMUNG UM 30°C
UND 100°C

# Fig. 5

Fig. 6

Fig. 7A

EP 2 449 642 B1

KLEMME 30

LAST

120

125

μC    130

MESSEN DER
LASTSPEKTRUMSKENNLINIE

Δt (s)

10000
1000
100
10
1
0,1
0,01

10                    100    AUSLÖSEKENNLINIE                    1000

Strom (A)

# Fig. 7B

Fig. 8

Fig. 9

EP 2 449 642 B1

**IN DER BESCHREIBUNG AUFGEFÜHRTE DOKUMENTE**

**In der Beschreibung aufgeführte Patentdokumente**

- WO 2010145757 A1
- EP 0713279 A1
- WO 2009056903 A1
- DE 102007062955